(19) **Europäisches Patentamt**
**European Patent Office**
**Office européen des brevets**

(11) Veröffentlichungsnummer: **0 511 694 A2**

(12) # EUROPÄISCHE PATENTANMELDUNG

(21) Anmeldenummer: **92200862.8**

(22) Anmeldetag: **26.03.92**

(51) Int. Cl.5: **H01B 1/08**, C08K 3/10, C08K 9/02

(30) Priorität: **29.03.91 JP 89227/91**

(43) Veröffentlichungstag der Anmeldung:
**04.11.92 Patentblatt 92/45**

(84) Benannte Vertragsstaaten:
**AT BE CH DE DK ES FR GB GR IT LI NL PT SE**

(71) Anmelder: **METALLGESELLSCHAFT Aktiengesellschaft Reuterweg 14 W-6000 Frankfurt am Main(DE)**
Anmelder: **MITSUI KINZOKU 2-1-1, Nihonbashi-Muromachi Chuo-ku, Tokyo 103(JP)**

(72) Erfinder: **Griebler, Wolf-Dieter, Dr. Zahnstrasse 25 W-4130 Moers 1(DE)**
Erfinder: **Hocken, Jörg, Dr.**
**Oberkasseler Strasse 45 W-4000 Düsseldorf 11(DE)**
Erfinder: **Rudolph, Günther, Dr.**
**Albert-Schweitzer-Strasse 5 W-6451 Neuberg Hess-1(DE)**
Erfinder: **Sato, Norihiro 6-7-13, Hikoshima-Sakomachi Shimonoseki-shi, Yamaguchiken(JP)**
Erfinder: **Hayashi, Takao 5-4-5, Hikoshima-Sakomachi Shimonoseki-shi, Yamaguchi-ken(JP)**
Erfinder: **Kasahara, Nobuyoshi 812-9, Mizuno Sayama-shi, Saitama-ken(JP)**

(74) Vertreter: **Rieger, Harald, Dr. Reuterweg 14 W-6000 Frankturt am Main(DE)**

(54) **Elektrisch leitfähiger faseriger Füllstoff und Verfahren zu seiner Herstellung.**

(57) Ein elektrisch leitfähiger faseriger Füllstoff enthält Fasern aus Aluminiumborat als Kernwerkstoff und eine den Kernwerkstoff bedeckende Schicht aus einer elektrisch leitfähigen Substanz oder enthält Fasern aus Aluminiumborat als Kernwerkstoff, eine die Fasern aus Aluminiumborat bedeckende Schicht aus Titanoxid und eine die Schicht aus Titanoxid bedeckende Schicht aus einer elektrisch leitfähigen Substanz. Man kann den elektrisch leitfähigen faserigen Füllstoff in einem Verfahren herstellen, in dem direkt auf der Oberfläche von Fasern aus Aluminiumborat eine Schicht aus einer mit Antimon oder Fluor dotierten, elektrisch leitfähigen Substanz gebildet wird, oder in einem Verfahren mit folgenden Schritten: auf der Oberfläche der Fasern aus Aluminiumborat wird eine Zwischenschicht aus Titanoxid in einer auf das Gewicht der Fasern aus Aluminiumborat bezogenen Menge von 2 bis 50 Gew.-% gebildet, und danach wird auf der Oberfläche der Fasern aus Aluminiumborat eine Schicht aus einer mit Antimon oder Fluor dotierten, elektrisch leitfähigen Substanz gebildet. Der Füllstoff hat einen niedrigen spezifischen elektrischen Volumenwiderstand und verleiht bei seinem Zusatz auch in einer nur kleinen Menge zu einem Grundwerkstoff, wie einem Harz, diesem eine hohe Leitfähigkeit pro Gewichtseinheit des zugesetzten Füllstoffes. Beim Beimischen des Füllstoffes zu einem Grundwerkstoff, wie Papier, Kunststoff, Kautschuk, Harz oder Anstrichstoff, wird die auf die Oberfläche der Füllstoffasern aufgetragene, elektrisch leitfähige Substanz nicht abgeschält, so daß die elektrische Leitfähigkeit des Füllstoffes dabei nicht beeinträchtigt wird. Da der Füllstoff als solcher weiß oder durchsichtig ist, kann der Farbton eines derartigen Grundwerkstoffes durch Beimischen eines Färbemittels nach Belieben verändert werden.

(a) Gebiet der Erfindung

Die Erfindung betrifft einen elektrisch leitfähigen faserigen Füllstoff und ein Verfahren zum Herstellen des Füllstoffes, insbesondere einen elektrisch leitfähigen faserigen Füllstoff, der einem Grundwerkstoff, wie Papier, Kunststoff, Kautschuk, Harz oder Anstrichstoff, beigemischt wird, um ihn elektrisch leitfähig zu machen, und der einen niedrigen spezifischen elektrischen Volumenwiderstand und pro Gewichtseinheit des Füllstoffes eine ausgezeichnete elektrisch leitfähigmachende Wirkung hat, sowie ein Verfahren zum Herstellen dieses Füllstoffes.

(b) Feschreibung des Standes der Technik

Es sind verschiedene feinteilige Substanzen bekannt, die beispielsweise Kunststoffen und Anstrichstoffen beigemischt werden können, um sie elektrisch leitfähig zu machen. Beispiele derartiger Substanzen sind mit Antimon dotiertes Zinnoxidoulver, mit Aluminium dotiertes Zinkoxidoulver, ferner mit Zinnoxid überzogenes Pulver, beispielsweise aus Titanoxid oder Aluminiumoxid, sowie mit Zinnoxid überzogene Fasern, beispielsweise aus Glas, Alkalimetalltitanaten und Titanoxid.

Es ist bekannt, daß in einem Grundwerkstoff, wie Kunststoff oder Anstrichstoff, dem feinverteilte elektrisch leitfähige Substanzen beigemischt werden, um ihm eine ausgezeichnete elektrische Leitfähigkeit zu verleihen, die Teilchen aus diesen elektrisch leitfähigen Substanzen einander berühren müssen. Daher muß bei Verwendung eines kugelförmigen elektrisch leitfähigen Pulvers dieses in einer großen Menge beigemischt werden. Aus diesem Grund haben durch Beimischen von teurem elektrisch leitfähigem Pulver erhaltene Produkte wegen ihrer hohen Herstellungskosten nur einen beschränkten Anwendungsbereich.

Angesichts dieses Problems sind bereits die vorgenannten Faserstoffe vorgeschlagen worden, bei denen das Längen-Durchmesser-Verhältnis beträchtlich höher ist als bei einem kugeligen Pulver und deren Form es ermöglicht, selbst bei ihrer Verwendung in einer relativ kleinen Menge die Wahrscheinlichkeit einer Berührung zwischen den Teilchen der leitfähigmachenden Substanzen zu erhöhen. Beispielsweise sind in der JP-OS-Sho 59-102820 und der JP-OS Sho 62-59528 mit einer Zinnoxidsubstanz überzogene, elektrisch leitfähige Fasern aus Alkalimetalltitanat der allgemeinen Formel $M_2O.nTiO_2.mH_2O$ und ein Verfahren zum Herstellen derselben beschrieben. Ferner ist in der JP-OS Sho 62-122005 für die Herstellung eines faserigen, weißen, elektrisch leitfähigen Füllstoffes ein Verfahren beschrieben, in dem alkalische Komponenten, die die elektrische Leitfähigkeit beeinträchtigen würden, dadurch herausgelaugt werden, daß die Fasern aus Alkalimetalltitanat mit einer Säure vorbehandelt werden, bevor die Fasern mit einer Zinnoxidsubstanz überzogen werden.

Wenn diese üblichen elektrisch leitfähigen faserigen Füllstoffe aus Alkalimetalltitanat anstelle von elektrisch leitfähigen Fasern, zu deren Erzeugung Glasfasern mit einer elektrisch leitfähigen Substanz überzogen worden sind, einem Grundwerkstoff, wie Kunststoff, Kautschuk oder Anstrichstoff, beigemischt werden, bewirkt ein Ablösen euch einer nur kleinen Menge das Faserstoffes von der elektrisch leitfähigen Substanz nur eine geringe Herabsetzung der elektrisch leitfähigmachenden Wirkung desselben. Dabei haben aber die Fasern aus Alkalimetalltitanat als solche nur eine relativ geringe Säurebeständigkeit, was zu verschiedenen Problemen führt. Beispielsweise können beim Beschichten der Fasern mit einer elektrisch leitfähigen Substanz die Alkalikomponenten dar Fasern durch die Einwirkung einer Säure herausgelaugt werden, so daß dann die Fasern leicht brechen, ihr Durchmesser verkleinert wird und sie porös werden und dadurch ihre Oberfläche unerwünschterweise vergrößert wird. Aus diesem Grunde muß zum Ausbilden einer elektrisch leitfähigen Schicht, die dieselbe Dicke hat wie bei einem üblichen Füllstoff, eine elektrisch leitfähige Substanz in einer großen Menge verwendet werden.

Ferner ist die elektrische Leitfähigkeit von Produkten, denen bei ihrer Herstellung ein elektrisch leitfähiger Füllstoff beigemischt worden ist, im allgemeinen von dem Volumenanteil das elektrisch leitfähigen Füllstoffes abhängig. Daher nimmt die erforderliche Menge des elektrisch leitfähigen Füllstoffes mit seinem spezifischen Gewicht ab. In dieser Hinsicht sind jedoch die vorerwähnten Fasern aus Alkalimetalltitanat nicht immer befriedigend.

ANGABE DER ERFINDUNG

Somit hat die Erfindung die Aufgabe, einen elektrisch leitfähigen faserigen Füllstoff zu schaffen, durch den die vorstehend erläuterten, bei den üblichen Füllstoffen dieser Art auftretenden Probleme vermieden werden können.

Insbesondere hat die Erfindung die Aufgabe, einen elektrisch leitfähigen faserigen Füllstoff zu schaffen, der einen niedrigen spezifischen elektrischen Volumenwiderstand und pro Gewichtseinheit des Füllstoffes eine ausgezeichnete elektrisch leitfähigmachende Wirkung hat (d.h. einem Grundwerkstoff, wie einem Harz, nur in einer kleinen Menge beigemischt zu werden braucht).

Eine weitere Aufgabe dar Erfindung ist die Schaffung eines elektrisch leitfähigen faserigen Füllstoffes, dessen auf seiner Oberfläche einen elektrisch leitfähigen Überzug bildende Substanz sich nicht unter Herabsetzung der elektrischen Leitfähigkeit des Füllstoffes ablöst, wenn der Füllstoff einem Grundwerkstoff, wie Papier, Kunststoff, Kautschuk, Harz oder Anstrichstoff, beigemischt wird.

Eine weitere Aufgabe der Erfindung ist die Schaffung eines elektrisch leitfähigen Füllstoffes, der als solcher weiß oder durchsichtig ist, so daß der Farbton eines den elektrisch leitfähigen Füllstoffes enthaltenden Grundwerkstoffes, wie Papier, Kunststoff, Kautschuk, Harz oder Anstrichstoff, durch den Zusatz eines Färbemittels willkürlich verändert werden kann.

Die Erfinder dar vorliegenden Erfindung haben zur Lösung der vorgenannten Aufgaben ausgedehnte Forschungsarbeiten durchgeführt, bei denen sie zur Erkenntnis gelangt sind, daß Fasern aus Aluminiumborat für die Verwendung als Kernwerkstoff geeignet sind, weil sie im Vergleich mit Fasern aus Alkalimetalltitanat eine hohe Festigkeit, einen hohen Elastizitätsmodul, eine hohe Hitzebeständigkeit und Säurebeständigkeit und eine geringe theoretische Dichte haben. Diese Erkenntnis ist die Grundlage der vorliegenden Erfindung.

Ein Gegenstand der Erfindung ist ein elektrisch leitfähigar, leichter faseriger Füllstoff, der eine ausgezeichnete elektrische Leitfähigkeit besitzt und der aus Fasern aus Aluminiumborat besteht, die mit einer Schicht aus einer elektrisch leitfähigen Substanz überzogen sind, oder der aus Fasern aus Aluminiumborat besteht, die mit einer Schicht aus Titanoxid und über dieser mit einer Schicht aus einer elektrisch leitfähigen Substanz überzogen sind.

Ein anderer Gegenstand dar Erfindung ist ein Verfahren, in dem zum Herstellen eines elektrisch leitfähigen faserigen Füllstoffes auf der Oberfläche von Fasern aus Aluminiumborat eine elektrisch leitfähige Schicht aus mit Antimon oder Fluor dotiertem Zinnoxid gebildet wird oder eine Schicht aus Titanoxid in einer auf das Gewicht der Fasern aus Aluminiumborat bezogenen Menge von 2 bis 50 Gew.-% und über dieser eine elektrisch leitfähige Schicht aus mit Antimon oder Fluor dotiertem Zinnoxid gebildet wird.

Dar elektrisch leitfähige faserige Füllstoff gemäß der Erfindung hat einen niedrigen spezifischen elektrischen Volumenwiderstand und hat nach seinem Beimischen zu einem Grundwerkstoff, wie Harz oder Anstrichstoff, pro Gewichtseinheit des Füllstoffes eine ausgezeichnete elektrisch leitfähigmachende Wirkung. Ferner ist der Füllstoff als solcher weiß oder durchsichtig, so daß durch gleichzeitiges Beimischen des elektrisch leitfähigen faserigen Füllstoffes und eines Färbemittels Produkte in jedem beliebigen Farbton hergestellt werden können. Ferner haben die Produkte eine hohe Qualität und sie sind nicht toxisch und ist der elektrisch leitfähige faserige Füllstoff nicht teuer.

## BESCHREIBUNG DER BEVORZUGTEN AUSFÜHRUNGSFORM

Nachstehend werden der elektrisch leitfähige faserige Füllstoff und das Verfahren zu seiner Herstellung näher erläutert.

Man kann Fasern aus jedem beliebigen Aluminiumborat verwenden. Vorzugsweise haben die Fasern bei Bestimmung unter dem Mikroskop eine mittlere Länge von 10 bis 30 Mikrometern und einen mittleren Durchmesser von 0,5 bis 1 Mikrometer und haben eine durch die Formel $9Al_2O_3.2B_2O_3$ oder $2Al_2O_3.B_2O_3$ angegebene chemische Zusammensetzung. Derartige Fasern aus Aluminiumborat sind beispielsweise unter der Handelsbezeichnung Alborex G von der Firma Shikoku Chemicals Corp. im Handel erhältlich.

Um gemäß der Erfindung die Fasern aus Aluminiumborat mit einer elektrisch leitfähigen Substanz, beispielsweise einer elektrisch leitfähigen Metallverbindung, zu überziehen, kann man eine Schicht aus dar elektrisch leitfähigen Substanz direkt auf die Oberfläche der Fasern aus Aluminiumborat auftragen und auf diese Weise einen elektrisch leitfähigen faserigen Füllstoff gemäß dar Erfindung von ausgezeichneter elektrischer Leitfähigkeit herstellen. Vorzugsweise wird auf der Oberfläche der Fasern aus Aluminiumborat jedoch zunächst eine Schicht aus Titanoxid gebildet, auf die dann zur Bildung einer elektrisch leitfähigen Schicht eine elektrisch leitfähige Substanz aufgetragen wird.

Die Schicht aus Titanoxid kann leicht gebildet werden, indem in Gegenwart der Fasern aus Aluminiumborat eine Lösung von Titanylsulfat oder Titantetrachlorid unter Erhitzen hydrolysiert wird. Die auf das Gewicht der Fasern aus Aluminiumborat bezogene Menge der gebildeten Schicht aus Titanoxid beträgt vorzugsweise 2 bis 50 Gew.-%. Die so gebildete Schicht aus Titanoxid wird dann bei einer Temperatur im Bereich von 150 bis 900°C kalziniert, so daß auf den Fasern aus Aluminiumborat eine einheitliche Schicht aus Titandioxid gebildet wird, die eine einheitliche rutilartige Kristallstruktur hat. Danach wird eine (mit Antimon oder Fluor dotierte) Zinnoxidsubstanz aufgetragen. Auf diese Weise kann man eine einheitliche, feste Schicht bilden, weil die Überzugsschicht aus der elektrisch leitfähigen Substanz dieselbe Kristalstruk-

tur hat wie die Zwischenschicht aus Titanoxid. Infolgedessen hat der hergestellte elektrisch leitfähige Füllstoff nicht nur eine ausgezeichnete elektrische Leitfähigkeit, sondern wird ferner bei seinem Beimischen zu einem Grundwerkstoff ein Abschälen dar elektrisch leitfähigen Schicht von dem Füllstoff und daher auch eine Verminderung seiner elektrischen Leitfähigkeit vermieden. Infolge des Vorhandenseins der einheitlichen Zwischenschicht wird die elektrische Leitfähigkeit auch nicht durch ein Diffundieren von Al und B in die elektrisch leitfähige Schicht beeinträchtigt. Ferner ist dank der eine hohe Brechzahl besitzenden Schicht aus Titanoxid der Füllstoff weiß, so daß er eine Trübung bewirkt.

Gemäß der Erfindung wird das Titanoxid vorzugsweise in einer Menge von 2 bis 50 Gew.-% aufgetragen. Wenn ein durchsichtiger Füllstoff erwünscht ist, werden die Fasern aus Aluminiumborat nur mit einer relativ kleinen Menge Titanoxid überzogen. Zum Herstellen eines weißen Füllstoffes trägt man dagegen das Titanoxid in einer großen Menge auf. Wenn weniger als 2 Gew.-% Titanoxid aufgetragen werden, ist es schwierig, die Oberfläche der Fasern aus Aluminiumborat gleichmäßig mit Titanoxid zu überziehen. Andererseits führt die Verwendung von mehr als 50% Titanoxid zum Vorhandensein von freiem Titanoxid auf dem hergestellten Füllstoff und zu einer höheren theoretischen Dichte desselben.

Die mit Titanoxid überzogenen Fasern aus Aluminiumborat werden dann zum Auftragen einer elektrisch leitfähigen Substanz in Wasser dispergiert. Dabei wird als elektrisch leitfähige Substanz zweckmäßig eine (mit Antimon oder Fluor dotierte) Zinnoxidverbindung verwendet. Antimon wird als Dotierstoff bevorzugt, weil es leicht gehandhabt werden kann und eine hohe Bindungsrate hat.

Zum Überziehen dar mit Titanoxid überzogenen Fasern aus Aluminiumborat mit der Zinnoxidverbindung kann man jedes beliebige geeignete Verfahren anwenden. Bevorzugte Ausführungsbeispiele eines derartigen Verfahrens werden nachstehend angegeben: (1) Die mit Titanoxid überzogenen Fasern aus Aluminiumborat werden in Wasser dispergiert, so daß eine Aufschlämmung erhalten wird, der bei 60 bis 80°C eine gewünschte Menge Zinn(IV)chlorid und Antimonchlorid enthaltend ethanolische Lösung zugesetzt wird, die dadurch hydrolysiert werden, so daß eine mit Antimon dotierte Zinnoxidverbindung ausgefällt wird und auf den Fasern aus Aluminiumborat eine Überzugsschicht bildet. Dann wird die Aufschlämmung filtriert und das Produkt gewaschen, getrocknet und dann kalziniert. (2) Die mit Titanoxid überzogenen Fasern aus Aluminiumborat werden in Wasser dispergiert, so daß eine Aufschlämmung erhalten wird, der bei 60 bis 80°C eine wäßrige Lösung zugesetzt wird, die eine gewünschte Menge Zinn(IV)chlorid und Antimonchlorid enthält und gleichzeitig damit eine wäßrige Lösung eines Alkalis zugesetzt wird, wobei der pH-Wert der Aufschlämmung zwischen 2 und 5 gehalten wird. Infolgedessen wird eine mit Antimon dotierte Zinnoxidverbindung ausgefällt, die auf den Fasern aus Aluminiumborat eine Überzugsschicht bildet. Dann wird die Aufschlämmung filtriert und das Produkt gewaschen, getrocknet und dann kalziniert. (3) Durch Dispergieren der mit Titanoxid überzogenen Fasern aus Aluminiumborat in Wasser wrid eine Aufschlämmung erhalten, der bei 60 bis 80°C eine Lösung eines Alkalimetallstannats zugesetzt wird. Durch Zusatz einer verdünnten Schwefelsäurelösung zu der Aufschlämmung wird deren pH-Wert allmählich auf 1,5 bis 3,0 herabgesetzt, so daß eine Zinnverbindung ausgefällt wird, die auf den Fasern aus Aluminiumborat eine Überzugsschicht bildet. Dann werden gleichzeitig allmählich eine Lösung von Antimonchlorid und eine alkalische Lösung der Aufschlämmung zugesetzt, während deren pH-Wert im Bereich von 1,5 bis 3,0 gehalten wird. Infolgedessen wird eine Antimonverbindung ausgefällt, die auf den überzogenen Fasern eine Schicht bildet. Dann wird die Aufschlämmung filtriert und das Produkt gewaschen und getrocknet und dann bei einer Temperatur im Bereich von 300 bis 800°C kalziniert.

Im Rahmen der Erfindung wird das Antimon als Dotierstoff in einer auf das Gewicht das Zinnoxids bezogenen Menge von 1 bis 15 Gew.-%, vorzugsweise von 2 bis 12 Gew.-% $Sb_2O_3$ verwendet, weil bei einem Zusatz von weniger als 1 Gew.-% der erhaltene Füllstoff nicht genügend leitfähig ist und bei einem Zusatz von mehr als 15 Gew.-% der hergestellte elektrisch leitfähige Füllstoff eine dunkelblaue Farbe hat.

Nachstehend werden verschiedene mit dem elektrisch leitfähigen faserigen Füllstoff gemäß der Erfindung erzielbare Effekte näher erläutert:

(1) Der elektrisch leitfähige faserige Füllstoff hat als solcher eine hohe elektrische Leitfähigkeit und verleiht nach seinem Beimischen auch in einer nur kleinen Menge zu einem Grundwerkstoff, wie Harz, Kautschuk oder Anstrichstoff, diesem eine hohe elektrische Leitfähigkeit.

(2) Bei Verwendung einer Zwischenschicht aus Titanoxid kann man eine elektrisch leitfähige Schicht herstellen, die eine hohe Festigkeit besitzt und daher durch mechanische Einwirkung, z.B. durch die beim Beimischen des Füllstoffes zu einem Grundwerkstoff auftretende Reibung, nicht abgeschält und daher geschädigt werden kann.

(3) Dar elektrisch leitfähige faserige Füllstoff ist je nach der Menge des Überzuges aus Titanoxid weiß oder durchsichtig, so daß Produkte mit jedem gewünschten Farbton hergestellt werden können, wann man gleichzeitig den erfindungsgemäßen Füllstoff und ein organisches oder anorganisches Färbemittel beimischt.

(4) Dar erfindungsgemäße Füllstoff besteht aus Fasern, die eine hohe Festigkeit, einen hohen Elastizitätsmodul und eine hohe Hitzebeständigkeit besitzen, und dient daher auch als Verstärkungszusatz.

Nachstehend wird die Erfindung an Hand von nicht einschränkenden Ausführungsbeispielen näher erläutert und wird der in der Praxis durch die Erfindung erzielbare Effekt durch Vergleich mit Kontrollbeispielen aufgezeigt.

Beispiel 1

100 g der von dar Firma Shikoku Chemicals Corporation als Alborex G erhältlichen Fasern aus Aluminiumborat wurden in 1500 ml Wasser dispergiert. Die so erhaltene Aufschlämmung wurde auf 40°C erwärmt und dabei mit einem Rührgerät gerührt. Danach wurden dar Aufschlämmung 65,38 g einer 24% $Ti(SO_4)_2$ enthaltenden Lösung von Titanylsulfat zugesetzt und wurde die Aufschlämmung auf 90°C erhitzt und 60 min ständig gerührt. Danach wurde die Aufschlämmung filtriert und das Produkt gewaschen und getrocknet und 2 Stunden bei 500°C kalziniert. Es wurden mit Titanoxid überzogene Fasern aus Aluminiumborat erhalten.

100 g der so erhaltenen, mit Titanoxid überzogenen Fasern aus Aluminiumborat wurden in 1500 ml Wasser dispergiert. Die so erhaltene Aufschlämmung wurde auf 75°C erhitzt. Dann wurde der Aufschlämmung eine Lösung von 81,09 g Natriumstannat (96% $Na_2SnO_3$) in 500 ml Wasser zugesetzt und wurde die Aufschlämmung danach 30 min gerührt und danach über 90 min mit einer 20%igen Schwefelsäurelösung versetzt, um ihren pH-Wert auf 2,5 zu halten. Danach wurde die Aufschlämmung auf dem pH-Wert 2,5 und auf einer Temperatur von 75°C gehalten und wurden über 3 Stunden gleichzeitig 306 ml einer wäßrigen Lösung von 8,32 g Antimonchlorid (98% $SbCl_3$) in verdünnter Salzsäure und eine 25%ige Natriumhydroxidlösung zugesetzt. Nach der vollständigen Zugabe wurde die Aufschlämmung 3 Stunden reifen gelassen, während der pH-Wert 2,5 und die Temperatur von 75°C aufrechterhalten wurden. Danach wurde die Aufschlämmung filtriert und das Produkt gewaschen und getrocknet und an der Luft 2 Stunden bei 600°C kalziniert. Es wurde ein elektrisch leitfähiger, weißer faseriger Füllstoff gemäß der Erfindung erhalten, der Antimon in einer Menge von 3,5 Gew.-% $Sb_2O_3$ und Zinn in einer Menge von 29,5 Gew.-% $SnO_2$ enthielt. Die Betrachtung das elektrisch leitfähigen, weißen faserigen Füllstoffes mit dem Rasterelektronenmikroskop ergab, daß die Oberfläche dar Fasern aus Aluminiumborat mit der elektrisch leitfähigen Schicht gleichmäßig überzogen war und daß der Füllstoff keine freie elektrisch leitfähige Substanz enthielt. Er hatte ein spezifischen elektrischen Volumenwiderstand von $4 \cdot 10^1$ Ohm.cm.

Beispiel 2

Das im Beispiel 1 durchgeführte Verfahren wurde wiederholt, wobei jedoch 41,16 g Natriumstannat und 4,22 g Antimon verwendet wurden, so daß ein elektrisch leitfähiger, weißer faseriger Füllstoff gemäß der Erfindung erhalten wurde, dar Antimon in einer Menge von 2,1 Gew.-% $Sb_2O_3$ und Zinn in einer Menge von 17,9 Gew.-% $SnO_2$ enthielt. Bei dar Betrachtung des elektrisch leitfähigen, weißen faserigen Füllstoffes mit dem Rasterelektronenmikroskop zeigte es sich, daß die Oberfläche der Fasern aus Aluminiumborat mit der elektrisch leitfähigen Schicht gleichmäßig überzogen war und daß der Füllstoff keine freie elektrisch leitfähige Substanz enthielt. Sein spezifischer elektrischer Volumenwiderstand betrug $6 \cdot 10^2$ Ohm.cm.

Beispiel 3

In der im Beispiel 1 angegebenen Weise wurden 100 g mit Titanoxid überzogene Fasern aus Aluminiumborat in 1500 ml Wasser dispergiert. Dar so erhaltenen Aufschlämmung wurden über 2 Stunden 400 ml einer ethanolischen Lösung zugesetzt, die 70,08 g Zinn(IV)chlorid (98% $SnCl_4$) und 5,98 g Antimonchlorid (98% $SbCl_3$) enthielt, so daß auf der Überfläche der mit Titanoxid überzogenen Fasern aus Aluminiumborat ein Überzug aus antimonhaltigem Zinnoxid abgeschieden wurde. Dann wurde die Aufschlämmung filtriert und das Produkt gewaschen und getrocknet und an der Luft 2 Stunden bei 600°C kalzimiert. Es wurde ein elektrisch leitfähiger, weißer faseriger Füllstoff gemäß der Erfindung erhalten, der Antimon in einer Menge von 2,6 Gew.-% $Sb_2O_3$ und Zinn in einer Menge von 27,4 Gew.-% $SnO_2$ enthielt. Die Betrachtung mit dem Rasterelektronenmikroskop ergab, daß die Oberfläche dar Fasern aus Aluminiumborat mit der elektrisch leitfähigen Schicht gleichmäßig überzogen war und daß der Füllstoff keine freie elektrisch leitfähige Substanz enthielt. Sein spezifischer elektrischer Volumenwiderstand betrug $1,8 \cdot 10^3$ Ohm.cm.

Beispiel 4

In einer Wiederholung des Verfahrens nach Beispiel 2 wurden anstelle dar im Beispiel 2 verwendeten, mit Titanoxid überzogenen Fasern aus Aluminiumborat unbehandelte Fasern aus Aluminiumborat verwendet. Der so hergestellte, elektrisch leitfähige, weiße faserige Füllstoff gemäß dar Erfindung enthielt Antimon in einer Menge von 2,1 Gew.-% $Sb_2O_3$ und Zinn in einer Menge von 17,9 Gew.-% $SnO_2$. Die Betrachtung des elektrisch leitfähigen, weißen faserigen Füllstoffes mit dem Rasterelektronenmikroskop ergab, daß die Oberfläche dar Fasern aus Aluminiumborat mit der elektrisch leitfähigen Schicht gleichmäßig überzogen war und daß der Füllstoff keine freie elektrisch leitfähige Substanz enthielt. Sein spezifischer elektrischer Volumenwiderstand betrug $1,8 . 10^3$ Ohm.cm.

Beispiel 5

100 g Fasern aus Aluminiumborat (von der Firma Shikoku Chemicals Corp. als Alborex G erhältlich) wurden in 1000 ml Wasser dispergiert. Die so erhaltene Aufschlämmung wurde mit einer Rührmaschine gerührt und dabei auf 70°C erhitzt und zum Einstellen auf den pH-Wert 2 mit Salzsäure versetzt. Danach wurden der Aufschlämmung 2,50 g Zinn(IV)chlorid (98% $SnCl_4$) in Salzsäure zugesetzt und wurde die Aufschlämmung dann 60 min gerührt, worauf sie den pH-Wert 1,5 hatte. Dann wurden dar Aufschlämmung 500 ml einer durch Auflösen von 78,04 g Zinn(IV)chlorid (98% $SnCl_4$) in einer Natriumhydroxidlösung erhaltenen Lösung zugesetzt. Die Aufschlämmung wurde dann 30 min bei 70°C gerührt. Danach wurde dar Aufschlämmung zum Einstellen auf den pH-Wert 2,5 über 90 min eine Salzsäurelösung von 2 mol/l zugesetzt. Danach wurden der Aufschlämmung über 5 Stunden unter Rühren gleichzeitig 300 ml einer durch Auflösen von 8,32 g Antimonchlorid (98% $SbCl_3$) in einer verdünnten Salzsäurelösung erhaltenen Lösung und eine 10%ige Natriumhydroxidlösung zugesetzt und wurden dabei der pH-. Wert auf 2,5 und die Temperatur auf 75°C gehalten. Nach der vollständigen Zugabe wurde die Aufschlämmung 5 Stunden reifen gelassen, wobei der pH-Wert 2,5 und die Temperatur von 75°C aufrechterhalten wurden. Danach wurde die Aufschlämmung filtriert und das Produkt gewaschen und getrocknet und an der Luft 2 Stunden bei 600°C kalziniert. Der elektrisch leitfähige, weiße faserige Füllstoff enthielt Antimon in einer Menge von 3,5 Gew.-% $Sb_2O_3$ und Zinn in einer Menge von 29,5 Gew.-% $SnO_2$. Die Betrachtung des elektrisch leitfähigen, weißen faserigen Füllstoffes mit dem Rasterelektronenmikroskop ergab , daß die Oberfläche der Fasern aus Aluminiumborat mit der elektrisch leitfähigen Schicht gleichmäßig überzogen war und daß dar Füllstoff keine freie elektrisch leitfähige Substanz enthielt. Sein spezifischer elektrischer Volumenwiderstand betrug $1 . 10^2$ Ohm cm.

Kontrollbeispiel

Zum Herstellen eines Anstrichstoffes wurden der im Beispiel 1 hergestellte elektrisch leitfähige faserige Füllstoff (spezifischer elektrischer Volumenwiderstand $4 .10^1$ Ohm.cm) bzw. handelsübliches elektrisch leitfähiges Zinnoxidpulver (spezifischer elektrischer Volumenwiderstand $2 . 10°$ Ohm.cm), ferner elektrisch leitfähiges Zinkoxidpulver (spezifischer elektrischer Volumenwiderstand $2 . 10°$ Ohm.cm) bzw. nadelförmiges elektrisch leitfähiges Titanoxid (spezifischer elektrischer Volumenwiderstand $1,3 . 10^1$ Ohm.cm) bzw. elektrisch leitfähige Fasern aus Alkalimetalltitanat (spezifischer elektrischer Volumenwiderstand $7,9 . 10°$ Ohm.cm) wurden je einem Polyesterharz in den in dar nachstehenden Tabelle 1 angegebenen Anteilen beigemischt. Der so erhaltene Anstrichstoff wurde mit einem Auftraggerät in einer Dicke von 50 Mikrometern auf die Oberfläche einer Polyester-Feinfolie aufgetragen und wurde dann getrocknet. Mit einem von der Firma Mitsubishi Jushi Engineering Co., Ltd. erhältlichen Widerstandmeßgerät wurde dann der Oberflächenwiderstand der so erhaltenen Feinfolie bestimmt. Ferner wurde zur Bestimmung der Durchsichtigkeit der beschichteten Feinfolie deren Gesamtlichtdurchlässigkeit mit einem von der Firma Nippon Denshoku Kogyo K.K. erhältlichen Trübungsmeßgerät gemessen.

Tabelle 1

| Füllstoffanteil (%) | 20 | 25 | 30 | 40 |
|---|---|---|---|---|
| Erfindung (Beispiel 1) | | | | |
| Oberflächenwiderstand | $7 \cdot 10^5$ | $1 \cdot 10^5$ | $3 \cdot 10^4$ | $1 \cdot 10^4$ |
| Gesamtlichtdurchlässigkeit | 95,8 | 94,8 | 93,8 | 79,9 |
| Erfindung (Beispiel 5) | | | | |
| Oberflächenwiderstand | $1 \cdot 10^6$ | $3 \cdot 10^5$ | $6 \cdot 10^4$ | $3 \cdot 10^4$ |
| Gesamtlichtdurchlässigkeit | 97,0 | 95,0 | 94,0 | 85,0 |
| Elektrisch leitfähiges Zinnoxid | | | | |
| Oberflächenwiderstand | $>10^{10}$ | $>10^{10}$ | $>10^{10}$ | $>10^{10}$ |
| Gesamtlichtdurchlässigkeit | 97,0 | 95,3 | 90,2 | 86,0 |
| Elektrisch leitfähiges Zinkoxid | | | | |
| Oberflächenwiderstand | $>10^{10}$ | $>10^{10}$ | $>10^{10}$ | $>10^{10}$ |
| Gesamtlichtdurchlässigkeit | --- | --- | --- | --- |
| Elektrisch leitfähige Nadeln aus Titanoxid | | | | |
| Oberflächenwiderstand | --- | $3 \cdot 10^7$ | $2 \cdot 10^6$ | $3 \cdot 10^5$ |
| Gesamtlichtdurchlässigkeit | --- | 28,4 | 23,6 | 27,3 |
| Elektrisch leitfähige Fasern aus Kaliumtitanat | | | | |
| Oberflächenwiderstand | $4 \cdot 10^6$ | $1 \cdot 10^6$ | $4 \cdot 10^5$ | $8 \cdot 10^4$ |
| Gesamtlichtdurchlässigkeit | 42,1 | 30,7 | 23,9 | 34,2 |

Füllstoffanteil (%) = Füllstoffgewicht/(Füllstoffgewicht + Harzgewicht) · 100
Oberflächenwiderstand in Ohm/□
Gesamtlichtdurchlässigkeit in %

Aus der Tabelle 1 geht hervor, daß der elektrisch leitfähige faserige Füllstoff gemäß dar Erfindung auch bei seinem Beimischen in einer nur kleinen Menge zu einem Grundwerkstoff diesem eine im Vergleich mit pulverförmigen elektrich leitfähigen Substanzen oder elektrisch leitfähigen faserigen Füllstoffen ausgezeichnete elektrische Leitfähigkeit verleiht.

Ferner kann man durch die Verwendung des elektrisch leitfähigen Füllstoffes gemäß der Erfindung in einem elektrisch leitfähigen Anstrichstoff eine elektrisch leitfähige Schicht bilden, die durchsichtig ist. Der elektrisch leitfähige Füllstoff gemäß der Erfindung hat daher im Vergleich mit enderen bekannten und üblichen elektrisch leitfähigen Füllstoffen ausgezeichnete Eigenschaften.

**Patentansprüche**

7

1. Elektrisch leitfähiger faseriger Füllstoff, der Fasern aus Aluminiumborat als Kernwerkstoff und eine die Oberfläche das Kernwerkstoffes bedeckende Schicht aus einer elektrisch leitfähigen Substanz besitzt.

2. Elektrisch leitfähigar faseriger Füllstoff nach Anspruch 1, dadurch gekennzeichnet, daß die Fasern aus Aluminiumborat eine mittlere Länge von 10 bis 30 Mikrometern und einen mittleren Durchmesser von 0,5 bis 1 Mikrometer haben und daß ihre chemische Zusammensetzung der Formel $9Al_2O_3 \cdot 2B_2O_3$ oder $2Al_2O_3 \cdot B_2O_3$ entspricht.

3. Elektrisch leitfähiger faseriger Füllstoff nach Anspruch 1, dadurch gekennzeichnet, daß die Schicht aus der elektrisch leitfähigen Substanz wenigstens teilweise aus einer Schicht aus einer mit Antimon oder Fluor dotierten Zinnoxidverbindung besteht.

4. Elektrisch leitfähiger faseriger Füllstoff nach Anspruch 3, dadurch gekennzeichnet, daß als Dotierstoff Antimon in einer auf das Gewicht des Zinnoxids bezogenen Menge von 1 bis 15 Gew.-% $Sb_2O_3$ vorhanden ist.

5. Elektrisch leitfähiger faseriger Füllstoff nach Anspruch 4, dadurch gekennzeichnet, daß das Antimon in einer auf das Gewicht des Zinnoxids vorhandenen Menge von 2 bis 12 Gew.-% $Sb_2O_3$ vorhanden ist.

6. Elektrisch leitfähiger faseriger Füllstoff, der Fasern aus Aluminiumborat als Kernwerkstoff, eine die Oberfläche dar Fasern aus Aluminiumborat bedeckende Schicht aus Titanoxid und eine die Schicht aus Titanoxid bedeckende Schicht aus einer elektrisch leitfähigen Substanz besitzt.

7. Elektrisch leitfähiger faseriger Füllstoff nach Anspruch 6, dadurch gekennzeichnet, daß die auf das Gewicht der Fasern aus Aluminiumborat bezogene Menge des als Überzug auf die Fasern aus Aluminiumoxid aufgetragenen Titanoxids 2 bis 50 Gew.-% beträgt.

8. Elektrisch leitfähiger faseriger Füllstoff nach Anspruch 6, dadurch gekennzeichnet, daß die Fasern aus Aluminiumborat eine mittlere Länge von 10 bis 30 Mikrometern und einen mittleren Durchmesser von 0,5 bis 1 Mikrometer haben und daß ihre chemische Zusammensetzung der Formel $9Al_2O_3 \cdot 2B_2O_3$ oder $2Al_2O_3 \cdot B_2O_3$ entspricht.

9. Elektrisch leitfähiger faseriger Füllstoff nach Anspruch 8, dadurch gekennzeichnet, daß die Schicht aus der elektrisch leitfähigen Substanz wenigstens teilweise aus einer Schicht aus einer mit Antimon oder Fluor dotierten Zinnoxidverbindung besteht.

10. Elektrisch leitfähiger faseriger Füllstoff nach Anspruch 9, dadurch gekennzeichnet, daß als Dotierstoff Antimon in einer auf das Gewicht des Zinnoxids bezogenen Menge von 1 bis 15 Gew.-% $Sb_2O_3$ vorhanden ist.

11. Elektrisch leitfähiger faseriger Füllstoff nach Anspruch 10, dadurch gekennzeichnet, daß das Antimon in einer auf das Gewicht des Zinnoxids bezogenen Menge von 2 bis 12 Gew.-% $Sb_2O_3$ vorhanden ist.

12. Verfahren zum Herstellen eines elektrisch leit fähigen faserigen Füllstoffes, in dem direkt auf der Oberfläche von Fasern aus Aluminiumborat eine Schicht aus einer mit Antimon oder Fluor dotierten, elektrisch leitfähigen Substanz gebildet wird.

13. Verfahren zum Herstellen eines elektrisch leitfähigen faserigen Füllstoffes mit folgenden Schritten: auf der Oberfläche der Fasern aus Aluminiumborat wird eine Zwischenschicht aus Titanoxid in einer auf das Gewicht der Fasern aus Aluminiumborat bezogenen Menge von 2 bis 50 Gew.-% gebildet, und danach wird auf der Oberfläche der Fasern aus Aluminiumborat eine Schicht aus einer mit Antimon oder Fluor dotierten, elektrisch leitfähigen Substanz gebildet.

14. Verfahren nach Anspruch 13, dadurch gekennzeichnet, daß zum Bilden der Schicht aus der elektrisch leitfähigen Substanz auf den mit Titanoxid überzogenen Fasern aus Aluminiumborat einer durch Dispergieren der mit Titanoxid überzogenen Fasern aus Aluminiumborat in Wasser gebildeten Aufschlämmung eine gewünschte Menge Zinn(IV)chlori- und Antimonchlorid enthaltende ethanolische Lösung zugesetzt wird, während die Aufschlämmung auf 60 bis 80°C gehalten wird, und infolgedessen die Chloride hydrolysiert werden und eine mit Antimon dotierte Zinnoxidverbindung ausgefällt wird, die auf den Fasern aus Aluminiumborat eine Überzugsschicht bildet, worauf die Aufschlämmung filtriert und das Produkt gewaschen, getrocknet und danach kalziniert wird.

15. Verfahren nach Anspruch 13, dadurch gekennzeichnet, daß zum Bilden der Schicht aus der elektrisch leitfähigen Substanz auf den mit Titanoxid überzogenen Fasern aus Aluminiumborat einer durch Dispergieren der mit Titanoxid überzogenen Fasern aus Aluminiumborat in Wasser gebildeten Aufschlämmung eine eine gewünschte Menge Zinn(IV)chlorid und Antimonchlorid enthaltende wäßrige Lösung und eine ein Alkali enthaltende wäßrige Lösung gleichzeitig zugesetzt werden, während die Aufschlämmung auf 60 bis 80°C und ihr pH-Wert im Bereich von 2 bis 5 gehalten wird, so daß eine mit Antimon dotierte Zinnoxidverbindung ausgefällt wird, die auf den Fasern aus Aluminiumborat eine Überzugsschicht bildet, worauf die Aufschlämmung filtriert und das Produkt gewaschen und getrocknet und danach kalziniert wird.

16. Verfahren nach Anspruch 13, dadurch gekennzeichnet, daß zum Bilden der Schicht aus der elektrisch leitfähigen Substanz auf den mit Titanoxid überzogenen Fasern aus Aluminiumborat einer durch Dispergieren der mit Titanoxid überzogenen Fasern aus Aluminiumborat in Wasser gebildeten Aufschlämmung eine Lösung eines Alkalimetallstannats zugesetzt wird, während die Aufschlämmung auf 60 bis 80°C gehalten wird, worauf durch Zusatz einer verdünnten Schwefelsäurelösung zu der Aufschlämmung deren pH-Wert allmählich auf 1,5 bis 3,0 herabgesetzt und dadurch eine Zinnverbindung ausgefällt wird, die auf den Fasern aus Aluminiumborat eine Überzugsschicht bildet, worauf der Aufschlämmung gleichzeitig eine Lösung von Antimonchlorid und eine alkalische Lösung allmählich zugesetzt werden, während der pH-Wert der Aufschlämmung auf 1,5 bis 3,0 gehalten wird, und infolgedessen eine Antimonverbindung ausgefällt wird, die auf den Fasern eine Schicht bildet, worauf die Aufschlämmung filtriert und das Produkt gewaschen und getrocknet und dann bei einer Temperatur im Bereich von 300 bis 800°C kalziniert wird.